# EUROPEAN PATENT APPLICATION

(11) **EP 4 552 784 A1**
(43) Date of publication of application: **14.05.2025**
(21) Application number: 23835293.4
(22) Date of filing: 20.06.2023
(51) Int. Cl.: B23K 9/26

(54) **CONTACT TIP FOR WELDING**

(30) Priority: 08.07.2022 JP 2022110714
(71) Applicant: Panasonic Intellectual Property Management Co., Ltd., Kadoma-shi, Osaka 571-0057 (JP)
(72) Inventor: FUKUMITSU, Yoichi, Kadoma-shi, Osaka 571-0057 (JP); NATSUI, Akinaga, Kadoma-shi, Osaka 571-0057 (JP); KISO, Hiroyuki, Kadoma-shi, Osaka 571-0057 (JP); MIYANISHI, Taichiro, Kadoma-shi, Osaka 571-0057 (JP)
(74) Representative: Novagraaf International SA
(86) International application number: PCT/JP2023/022808
(87) International publication number: WO 2024/009759

(57) **Abstract**

A contact tip for welding includes: a tip case; a power supply tip that is housed in the tip case and supplies power to a welding wire supplied from a side close to one end of the power supply tip while holding the welding wire at another end opposite to the one end; and a guide that presses the power supply tip from the side close to the one end and houses the power supply tip in the tip case, in which the power supply tip has a shape in which an outer diameter from a press point pressed by the guide to a fulcrum in contact with the tip case increases from the press point toward the fulcrum, and the power supply tip is rotated about the fulcrum by pressing of the guide to hold the welding wire at the other end.

## Description

### TECHNICAL FIELD

The present disclosure relates to a contact tip for welding.

### BACKGROUND ART

PTL 1 discloses a welding torch including: a contact tip for welding power supply composed of a conductive member provided with a wire insertion hole for a welding wire to be supplied; and a tip cover configured to cover and incorporate the contact tip for welding power supply. The contact tip for welding power supply is disposed in the tip cover in a state where a pair of halved tip members divided in a half shape in an axial direction of the wire insertion hole can be tilted to enlarge and reduce a distance between distal ends of the respective halved tip members by bringing protrusions provided at base ends of pressure contacts of the respective halved tip members into contact with each other. The welding torch also includes tip leading-end biasing means that tilts the welding torch to narrow the distance between the distal ends of the respective halved tip members to hold a power supply point to the welding wire on a side close to the distal end of each of the halved tip members.

### Citation List

### Patent Literature

PTL 1: WO 2011/096013

### SUMMARY OF THE INVENTION

The present disclosure provides a contact tip for welding that suppresses variation in holding force of a welding wire at a power supply point to further improve welding quality.

A contact tip for welding, comprising: a tip case; a power supply tip that is housed in the tip case and supplies power to a welding wire supplied from a side close to one end of the power supply tip while holding the welding wire between the one end and another end opposite to the one end; and a guide that presses the power supply tip from the side close to the one end to house the power supply tip in the tip case, wherein the power supply tip has a shape in which an outer diameter from a press point pressed by the guide to a fulcrum in contact with the tip case increases from the press point toward the fulcrum, and the power supply tip is rotated about the fulcrum by pressing of the guide to hold the welding wire at the other end.

The present disclosure enables suppressing variation in holding force of a welding wire at a power supply point to further improve welding quality.

### BRIEF DESCRIPTION OF THE DRAWINGS

Fig. 1 is a sectional view of a contact tip for welding according to an exemplary embodiment.
Fig. 2 is an enlarged view of a main part of Fig. 1.
Fig. 3 is a side view of a welding tip.
Fig. 4 is a perspective view of a welding tip.
Fig. 5 is a perspective view of a first tip.
Fig. 6 is a perspective view of the first tip illustrated in Fig. 5 that is rotated by 90° about its axis.
Fig. 7 is a side view of a second tip.
Fig. 8 is a perspective view of the second tip illustrated in Fig. 7 that is rotated by 180° about its axis.
Fig. 9 is a sectional view of a welding tip as viewed from direction E.
Fig. 10 is an enlarged view of a main part of Fig. 9.

### DESCRIPTION OF EMBODIMENT

### (Background leading to the present disclosure)

A conventional contact tip for welding power supply is configured as follows: an elastic member is disposed coaxially with a feeding direction of a welding wire; a force point located at a pressure contact of a halved tip member is pressed by a tip press tool from backward; and an action point located at a distal end of the halved tip member is rotated (tilted) in an axial direction of a wire insertion hole about a fulcrum of a tip cover in contact with the pressure contact to hold the welding wire at the distal end of the halved tip member.

Here, there is a demand for further reducing the tip outer diameter of the contact tip for welding power supply. To further reduce an outer diameter of the contact tip for welding power supply, the contact tip for welding power supply needs to further reduce the amount of rotation (tilt) of the pressure contact (force point) of the halved tip member outward in the circumferential direction. Thus, a distance between the force point and the fulcrum needs to be made shorter than a distance between the fulcrum and the action point. When the distance between the force point and the fulcrum is shortened, holding force of the welding wire at the action point is reduced in the contact tip for welding power supply, and thus requiring the reduced holding force to be compensated using an elastic member having a large spring constant. However, as the spring constant of the elastic member increases, variation in the spring constant of the elastic member increases. For this reason, the contact tip for welding power supply using the elastic member having a large spring constant may cause variation in quality (such as positional deviation of a weld) of welding.

Hereinafter, an exemplary embodiment in which a contact tip for welding according to the present disclosure is specifically disclosed will be described below in detail with reference to the drawings as appropriate. However, unnecessarily detailed description may not be described. For example, detailed descriptions of already well-known matters and duplicated description of substantially identical configurations may not be described. This is to avoid unnecessary redundancy of the following description and to facilitate understanding of those skilled in the art. The appended drawings and the following descriptions are provided for those skilled in the art to fully understand the present disclosure, and are not intended to limit the subject matter set forth in the scope of claims in any way.

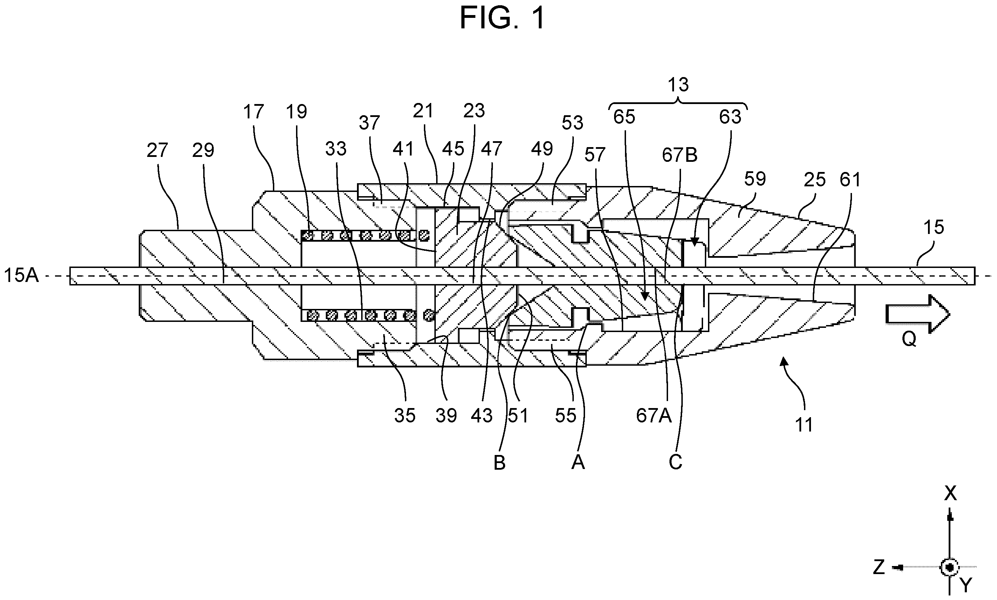

First, a configuration of contact tip 11 for welding will be described with reference to Fig. 1. Fig. 1 is a sectional view of contact tip 11 for welding according to an exemplary embodiment. Fig. 1 illustrates welding tip 13 in section of contact tip 11 for welding taken along plane X-Z.

Contact tip 11 for welding includes welding tip 13. Contact tip 11 for welding may be referred to as a collet tip. Welding tip 13 is an example of a power supply tip, and may be referred to as a power supply member, a collet, or the like.

Contact tip 11 for welding is attached to a distal end of a welding torch (not illustrated), and feeds welding wire 15 toward the distal end of the welding torch (wire feeding direction Q). The welding torch is used for gas shielded arc welding of a consumable electrode type, for example. The welding torch includes a shielding gas supply nozzle (not illustrated) in a cylindrical shape that is disposed coaxially with contact tip 11 for welding and radially outward of contact tip 11 for welding.

Contact tip 11 for welding includes upper tip base 17, elastic member 19, lower tip base 21, guide 23, tip case 25, and welding tip 13 along wire feeding direction Q. Contact tip 11 for welding has a coaxial structure in which guide 23, welding tip 13, and tip case 25 are coaxially disposed around axis 15A of welding wire 15.

Upper tip base 17 is attached to a distal end of a torch body (not illustrated) of the welding torch using screw part 27 screwed into the torch body. In screw part 27, welding wire 15 is inserted into wire introduction hole 29 formed coaxially with a thread axis of screw part 27. Screw part 27 is connected to upper tip base 17 formed in a cylindrical shape.

Upper tip base 17 is provided with male screw part 35 around an outer periphery of its distal end. Upper tip base 17 is fixed using male screw part 35 screwed into female screw part 37 provided on one end side of lower tip base 21.

Upper tip base 17 includes housing 33 between screw part 27 and guide upper surface 41, and housing 33 houses elastic member 19 (such as a coil spring).

Elastic member 19 is housed in housing 33, and is in contact at one end with upper tip base 17 and at the other end (wire feeding direction Q) with guide upper surface 41 of guide 23. Elastic member 19 biases guide 23 in wire feeding direction Q. Although elastic member 19 in the present embodiment has a spring constant of, for example, 7.8 N/mm, the spring constant is not limited thereto. Elastic member 19 may have a spring constant in a range from 2.5 N/mm to 20 N/mm inclusive.

Lower tip base 21 includes guide housing 39 that houses guide 23. Guide housing 39 houses guide 23 that is movable in wire feeding direction Q. Lower tip base 21 is provided with protrusion 43 over the circumferential direction inside guide housing 39.

Guide 23 is provided with wire guide hole 47 for guiding welding wire 15. Wire guide hole 47 is a through-hole substantially coaxial with wire introduction hole 29 formed in screw part 27, and welding wire 15 is inserted therethrough. When guide upper surface 41 is biased in wire feeding direction Q by elastic member 19, guide 23 moves in wire feeding direction Q in guide housing 39 to press welding tip 13.

When flange part 45 comes into contact with protrusion 43 of lower tip base 21, movement of guide 23 in wire feeding direction Q is restricted.

Guide 23 includes tapered part 49 that presses welding tip 13 in wire feeding direction Q. Tapered part 49 has a distal end outer diameter decreasing toward welding tip 13 (or it is tapered) to form distal end surface 51 in a substantially circular shape when viewed from a Z direction.

Lower tip base 21 is provided on its other end side with female screw part 53. Female screw part 53 is screwed onto male screw part 55 of tip case 25 to fix tip case 25 to lower tip base 21.

Tip case 25 includes tip housing space 57 for housing welding tip 13 (specifically, each of first tip 63 and second tip 65). Tip case 25 includes case distal end part 59 in a substantially truncated conical shape that is tapered in wire feeding direction Q.

Case distal end part 59 is provided with wire feeding hole 61 that communicates with tip housing space 57 to feed welding wire 15 fed from welding tip 13 to the outside of contact tip 11 for welding. Wire feeding hole 61 is in a taper shape increasing in diameter in wire feeding direction Q, or in a cylindrical shape.

Contact tip 11 for welding includes elastic member 19 that biases guide 23, guide 23 that presses welding tip 13 based on a biasing force of elastic member 19, and welding tip 13 that enables welding wire 15 to be fed toward a weld of a welding base material (not illustrated) while holding welding wire 15. Elastic member 19, guide 23, and welding tip 13 are disposed in this order along wire feeding direction Q of welding wire 15.

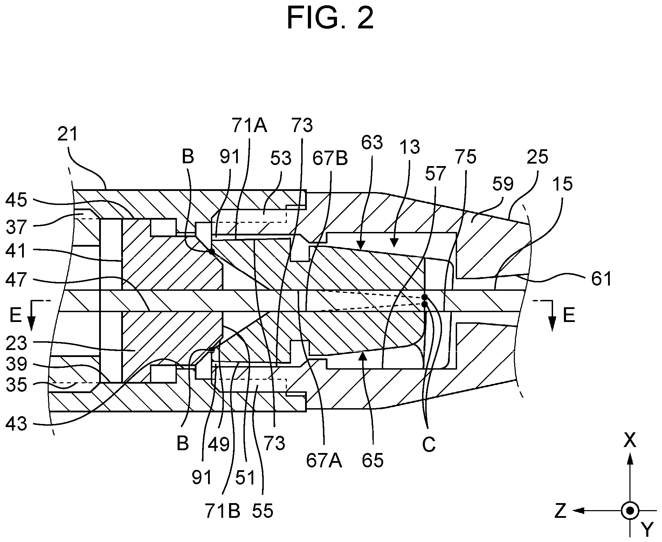

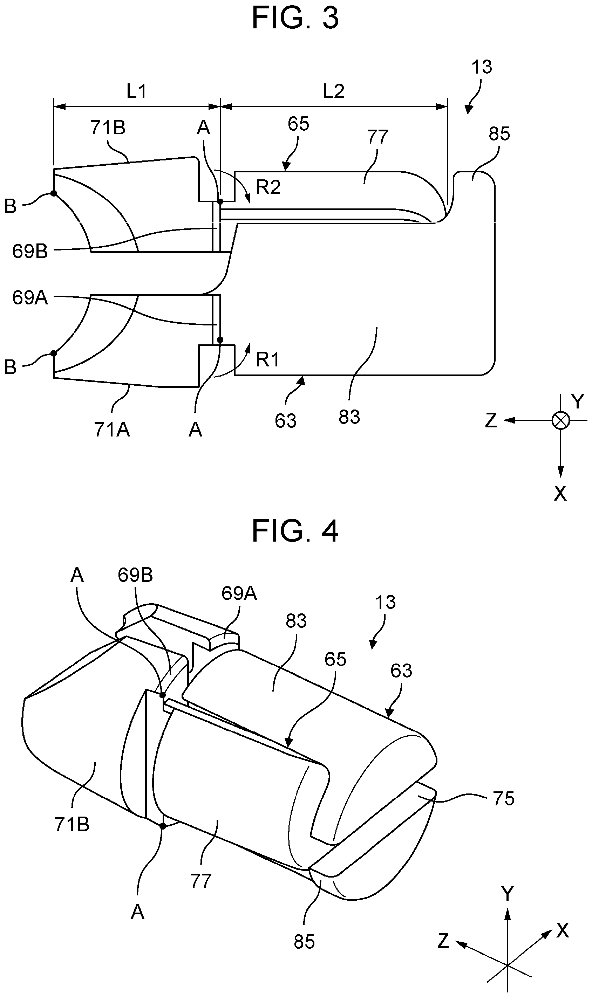

Next, holding of welding wire 15 with welding tip 13 will be described with reference to each of Figs. 2 to 4. Fig. 2 is an enlarged view of a main part of Fig. 1. Fig. 3 is a side view of welding tip 13. Fig. 4 is a perspective view of welding tip 13.

The side view of welding tip 13 illustrated in Fig. 3 is acquired by rotating welding tip 13 illustrated in Fig. 2 by 180° about axis 15A of welding wire 15. Welding tip 13 illustrated in Fig. 4 shows a state in which first tip 63 and second tip 65 are combined.

The sectional view of contact tip 11 for welding illustrated in Fig. 2 is acquired by taking contact tip 11 for welding along X-Z plane as in Fig. 1.

Welding tip 13 allows insertion of welding wire 15 fed through wire guide hole 47 of guide 23 to feed welding wire 15 toward a distal end of contact tip 11 for welding while holding the welding wire 15 at a distal end of welding tip 13 (action point C). Welding tip 13 is formed by combining first tip 63 and second tip 65. First tip 63 and second tip 65 are respectively provided with wire insertion holes 67A, 67B that are halved in both orientations in a direction of axis 15A.

First tip 63 and second tip 65 are combined to form welding tip 13 in which one wire insertion hole allowing insertion of welding wire 15 is formed by halved wire insertion hole 67A provided in first tip 63 and halved wire insertion hole 67B provided in second tip 65.

First tip 63 also includes slit 75 forward in wire feeding direction Q that is acquired by cutting out bottom part 85 having a substantially disk shape in a diametrical direction.

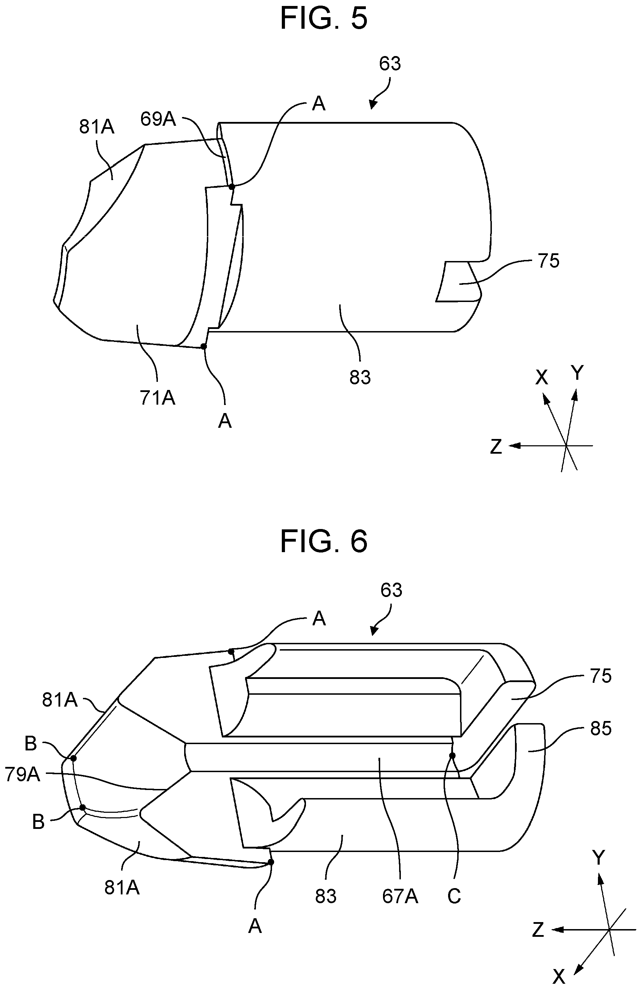

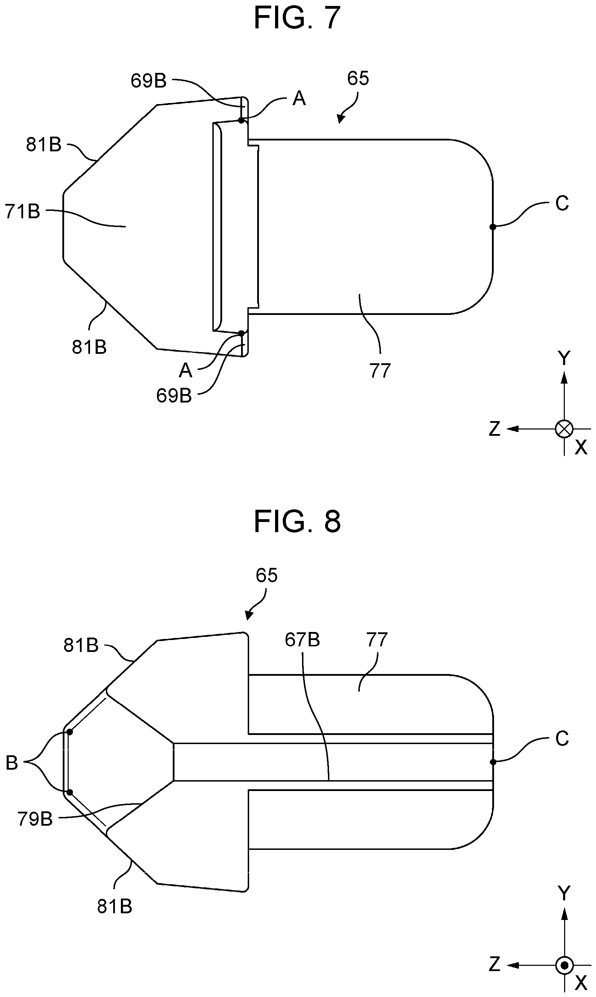

Welding tip 13 rotates about a total of four fulcrums A in contact with tip case 25 while a total of four pressed points pressed by guide 23 serve as force points B (see Figs. 6 and 8). As a result, distal end parts (action points C) of first tip 63 and second tip 65 pinch and hold welding wire 15 (see Fig. 2). Specifically, welding tip 13 holds welding wire 15 at a position of each action point C when first tip 63 rotates in direction R1 and second tip 65 rotates in direction R2.

Welding tip 13 is formed to have a dimension in which first distance L1 between force point B and fulcrum A and second distance L2 between fulcrum A and action point C satisfy the relationship, "L2/2 < L1".

Fulcrum A is located at locking part 69A, 69B having a maximum outer diameter of welding tip 13 (that is, each of first tip 63 and second tip 65) about axis 15A. First tip 63 and second tip 65 have two respective points divided in the circumferential direction, the points serving as fulcrums A (see Fig. 4).

Welding tip 13 is locked to protrusion 93 of tip case 25 at each of a total of four fulcrums A. Then, welding wire 15 is held at action point C by being rotated in directions R1 and R2 about two respective fulcrums A based on pressing force caused by guide 23.

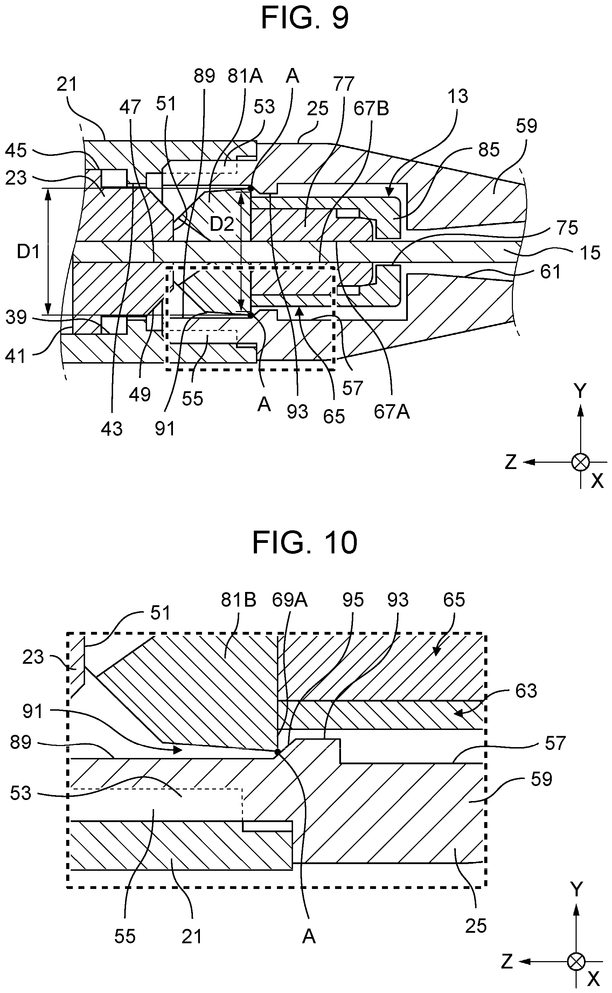

First tip 63 and second tip 65 of welding tip 13 includes inclined parts 71A, 71B, respectively, the inclined parts each extending radially outward from force point B toward fulcrum A in side view viewed from an X direction or a Y direction. Contact tip 11 for welding includes inclined parts 71A, 71B that cause gaps 91 (see Figs. 9 and 10) to be formed between respective inclined parts 71A, 71B and inner wall surface 73 of tip case 25. Gap 91 will be described later.

As a result, welding tip 13 includes inclined parts 71A, 71B and inner wall surface 73 of tip case 25 that are less likely to interfere with each other. As compared with when inclined parts 71A, 71B are not formed, welding tip 13 can secure a movable range (i.e., a rotation angle) in each of directions R1, R2 about fulcrum A of corresponding one of first tip 63 and second tip 65 even when first distance L1 is increased. That is, even when elastic member 19 having a large spring constant is not used, welding tip 13 can further increase holding force for welding wire 15 at action point C.

Thus, contact tip 11 for welding can more accurately feed welding wire 15, which is to be fed, toward a predetermined weld by using welding tip 13 holding welding wire 15 with a sufficient holding force. That is, contact tip 11 for welding can improve welding quality.

Fig. 5 is a perspective view of first tip 63. Fig. 6 is a perspective view of first tip 63 illustrated in Fig. 5 that is rotated by 90° about axis 15A.

First tip 63 includes a pair of inclined surfaces 81A that come into contact with guide 23, locking part 69A extending from each of inclined surfaces 81A to come into contact with tip case 25, inclined part 71A that expands radially outward of axis 15A from each of inclined surfaces 81A toward locking part 69A, and shaft part 83 formed with a substantially constant outer diameter from locking part 69A toward slit 75. Shaft part 83 includes bottom part 85 having a substantially disk shape about axis 15A and a diameter smaller than locking part 69A having a maximum outer diameter in first tip 63, the bottom part being formed on -Z side of action point C at which welding wire 15 is held.

Bottom part 85 is provided with slit 75 that cuts out bottom part 85 in the diametrical direction (X direction). First tip 63 enables bottom part 85 to be prevented from coming into contact with welding wire 15 held at action point C and fed to wire feeding hole 61 of case distal end part 59 by forming slit 75.

First tip 63 includes the pair of inclined surfaces 81A expanding radially outward of axis 15A toward wire feeding direction Q. The pair of inclined surfaces 81A constitute guide receiving part 79A in a halved taper shape that includes an opening decreasing in diameter from force point B in contact with guide 23 toward wire insertion hole 67A through which welding wire 15 is inserted.

Fig. 7 is a side view of second tip 65. Fig. 8 is a perspective view of second tip 65 illustrated in Fig. 7 that is rotated by 180° about axis 15A.

Second tip 65 includes shaft part 77 formed between locking part 69B serving as fulcrum A and action point C. Shaft part 77 is formed with a diameter about axis 15A, the diameter is smaller than that of locking part 69B having a maximum outer diameter in second tip 65.

Second tip 65 includes guide receiving part 79B that comes into contact with guide 23 at two force points B and is pressed by guide 23 that is biased by elastic member 19. Second tip 65 includes guide receiving part 79B in a taper shape in which an opening decreases in diameter from a position of force point B pressed by guide 23 toward wire insertion hole 67B.

Second tip 65 includes a pair of inclined surfaces 81B expanding radially outward of axis 15A toward wire feeding direction Q. The pair of inclined surfaces 81B constitute guide receiving part 79B in a halved taper shape that includes an opening decreasing in diameter from force point B in contact with guide 23 toward wire insertion hole 67B through which welding wire 15 is inserted.

Fig. 9 is a sectional view of welding tip 13. Fig. 9 illustrates welding tip 13 in section taken along plane Y-Z and viewed from direction E illustrated in Fig. 2. Fig. 10 is an enlarged view of a main part of Fig. 9.

As illustrated in Fig. 9, welding tip 13 pressed by guide 23 has a distance (i.e., distance D2 between one of locking parts 69A facing each other across axis 15A and corresponding one of locking parts 69B facing each other across axis 15A) between fulcrum A of first tip 63 and fulcrum A of second tip 65, the distance being substantially equal to inner diameter D1 of tip case 25.

That is, welding tip 13 includes inclined parts 71A, 71B that are each expanded toward an inner surface (i.e., radially outward of axis 15A) of tip case 25 to have a maximum outer diameter at corresponding one of locking parts 69A, 69B. Distance D2 between the one of locking parts 69A and the corresponding one of locking parts 69B is substantially equal to inner diameter D1 of tip case 25.

Tip case 25 includes protrusion 93 between hole 89 having inner diameter D1 about axis 15A and tip housing space 57. Hole 89 of tip case 25 includes gap 91 formed between inclined parts 71A, 71B in a state where welding tip 13 is pressed by guide 23 at force point B due to inclination of inclined parts 71A, 71B to cause each of locking parts 69A, 69B to be in contact with protrusion 93 at fulcrum A and locked.

As a result, even when the amount of swing (rotation) about fulcrum A increases as a holding part (i.e., action point C) holding welding wire 15 wears due to feeding of welding wire 15, contact tip 11 for welding can acquire a swing (rotation) margin of the amount of swing (rotation) due to gap 91, and thus second distance L2 between fulcrum A and action point C can be further reduced (L2/2 < L1). Additionally, even when the amount of swing (rotation) about fulcrum A increases due to wear of the holding part (i.e., action point C), contact tip 11 for welding acquire the swing (rotation) margin of the amount of swing (rotation) due to gap 91, and thus holding of welding wire 15 at action point C can be maintained.

Protrusion 93 includes tapered surface 95 (an example of an inclined surface) formed on a side connected to hole 89, where locking parts 69A, 69B of welding tip 13 are locked. Tapered surface 95 of protrusion 93 is formed with an opening decreasing in diameter radially inward about axis 15A as viewed from the Z direction. As a result, contact tip 11 for welding can regulate a position of welding tip 13 because welding tip 13 pressed by guide 23 is locked due to inclination of protrusion 93.

As described above, contact tip 11 for welding according to the exemplary embodiment includes tip case 25, welding tip 13 (an example of a power supply tip) that is housed in tip case 25 and supplies power to welding wire 15 supplied from a side close to one end of welding tip 13 while holding welding wire 15 at another end opposite to the one end, and guide 23 that presses welding tip 13 from the side close to the one end to house welding tip 13 in tip case 25. Welding tip 13 has a shape increasing in outer diameter from force point B (an example of a press point) pressed by guide 23 to fulcrum A in contact with tip case 25 (i.e., an outer diameter of each of inclined parts 71A, 71B about axis 15A), and is rotated about fulcrum A by pressing of guide 23 to hold welding wire 15 at the other end (action point C) of welding tip 13.

As a result, contact tip 11 for welding according to the exemplary embodiment can feed welding wire 15 in wire feeding direction Q while holding welding wire 15 at the other end (action point C) of welding tip 13. Welding tip 13 can maintain a holding state even when action point C is exhausted, and thus maintains a stable contact state with welding wire 15 to enable reduction in the amount of Joule heat at a power supply point (action point C). Thus, contact tip 11 for welding causes the amount of melting of welding tip 13 itself at power supply point (action point C) to decrease, and thus enables welding tip 13 to have a long life.

Contact tip 11 for welding includes welding tip 13 with inclined parts 71A, 71B expanding toward the inner surface (i.e., radially outward of axis 15A) of tip case 25 between force point B and fulcrum A, so that the swing (rotation) margin of welding tip 13 (i.e., each of first tip 63 and second tip 65) about fulcrum A can be increased. As a result, first distance L1 from force point B to fulcrum A of welding tip 13 can be secured, so that contact tip 11 for welding can further stabilize holding force for welding wire 15 at the other end (action point C) of welding tip 13 without using elastic member 19 having a large spring constant. Contact tip 11 for welding enables welding tip 13 to swing (rotate) by the amount of swing (rotation) margin even when welding tip 13 is melted at its other end (action point C), and thus can continuously hold welding wire 15 more stably. Thus, contact tip 11 for welding can more effectively suppress positional deviation of welding wire 15 on an XY plane to suppress target deviation for a weld (position), and thus can improve quality of welding.

Contact tip 11 for welding according to the exemplary embodiment further includes elastic member 19 that biases guide 23 in a supply direction of welding wire 15. Elastic member 19, guide 23, and welding tip 13 are disposed in the order of elastic member 19, guide 23, and welding tip 13 along the supply direction. As a result, contact tip 11 for welding according to the exemplary embodiment causes elastic member 19 to bias guide 23 in wire feeding direction Q to press welding tip 13 with biased guide 23 at force point B in wire feeding direction Q, so that welding tip 13 swings (rotates) about fulcrum A to be able to hold welding wire 15 at action point C.

Welding tip 13 of contact tip 11 for welding according to the exemplary embodiment is formed by combining at least two tips (each of first tip 63 and second tip 65). As a result, contact tip 11 for welding according to the exemplary embodiment causes not only halved first tip 63 to rotate in direction R1 about fulcrum A as the center of rotation but also second tip 65 to rotate in direction R2 about fulcrum A as the center of rotation, so that welding wire 15 can be held at action point C. First tip 63 and second tip 65 are substantially identical in position of each of fulcrum A, force point B, and action point C, in a direction orthogonal to axis 15A.

Contact tip 11 for welding according to the exemplary embodiment causes welding tip 13 to have an outer diameter at fulcrum A (i.e., distance D2 between the one of locking parts 69A and the corresponding one of locking parts 69B) that is substantially equal to inner diameter D1 of tip case 25. As a result, contact tip 11 for welding according to the exemplary embodiment regulates movement of welding tip 13 in the direction orthogonal to the axis 15A, so that rattling and positional deviation of welding tip 13 in tip case 25 can be suppressed.

Tip case 25 of contact tip 11 for welding according to the exemplary embodiment is provided on its inner surface with protrusion 93 to be in contact with welding tip 13. Protrusion 93 includes tapered surface 95 (an example of an inclined surface) on a side to be in contact with welding tip 13. As a result, contact tip 11 for welding according to the exemplary embodiment includes protrusion 93 of tip case 25, protrusion 93 including tapered surface 95 on the side to be in contact with welding tip 13, tapered surface 95 inclining radially inward about axis 15A, so that each of locking parts 69A, 69B of welding tip 13 is locked on tapered surface 95 to position welding tip 13. That is, contact tip 11 for welding enables not only regulating rattling and displacement of welding tip 13 by using tapered surface 95 of protrusion 93, but also further reducing displacement of welding wire 15 in its feeding direction.

Contact tip 11 for welding further enables guide hole 47 of tip case 25 to be substantially coaxial with the wire insertion hole of welding tip 13 by locking welding tip 13 on tapered surface 95. As a result, contact tip 11 for welding can more effectively suppress twisting and distortion of welding wire 15 during insertion through wire guide hole 47 and the wire insertion hole.

Contact tip 11 for welding according to the exemplary embodiment causes first distance L1 between force point B and fulcrum A, and second distance L2 between fulcrum A and a point holding welding wire 15 to satisfy the relationship, "L2/2 < L1". As a result, contact tip 11 for welding according to the exemplary embodiment has a swing (rotation) margin about fulcrum A based on the inclination of inclined parts 71A, 71B, so that welding wire 15 can be held at action point C even when second distance L2 satisfies the relationship, "L2/2 < L1", i.e., "L2 < L1 × 2".

Contact tip 11 for welding according to the exemplary embodiment includes elastic member 19 having a spring constant in a range from 2.5 N/mm to 20 N/mm inclusive. As a result, contact tip 11 for welding according to the exemplary embodiment actually uses elastic member 19 in which variation of the spring constant is suppressed without using elastic member 19 having a large spring constant, so that welding wire 15 can be more stably held at action point C. When elastic member 19 has a spring constant of 2.5 N/mm or less, contact tip 11 for welding may not stably hold welding wire 15 even when boosting action described above is obtained.

While various exemplary embodiments have been described above with reference to drawings, it is obvious that the present disclosure is not limited thereto. It is obvious that those skilled in the art can conceive various changes, modifications, substitutions, additions, deletions, and equivalents within the scope described in the claims, and it is understood that these naturally belong to the technical scope of the present disclosure. In addition, the respective constituent elements in the above-described various exemplary embodiments may be arbitrarily combined without departing from the gist of the invention.

### INDUSTRIAL APPLICABILITY

The present disclosure is useful as a contact tip for welding that suppresses variation in holding force of a welding wire at a power supply point to further improve welding quality.

### REFERENCE MARKS IN THE DRAWINGS

- 13: welding tip
- 15: welding wire
- 19: elastic member
- 23: guide
- 25: tip case
- 95: tapered surface
- A: fulcrum
- B: force point
- C: action point

## Claims

1. A contact tip for welding, comprising:
a tip case;
a power supply tip that is housed in the tip case and supplies power to a welding wire supplied from a side close to one end of the power supply tip while holding the welding wire between the one end and another end opposite to the one end; and
a guide that presses the power supply tip from the side close to the one end to house the power supply tip in the tip case,
wherein
the power supply tip has a shape in which an outer diameter from a press point pressed by the guide to a fulcrum in contact with the tip case increases from the press point toward the fulcrum, and
the power supply tip is rotated about the fulcrum by pressing of the guide to hold the welding wire at the other end.

2. The contact tip for welding according to Claim 1, further comprising:
an elastic member that biases the guide in a supply direction of the welding wire,
wherein the elastic member, the guide, and the power supply tip are disposed in an order of the elastic member, the guide, and the power supply tip along the supply direction.

3. The contact tip for welding according to Claim 1, wherein
the power supply tip is formed by combining at least two tips.

4. The contact tip for welding according to Claim 1, wherein
the power supply tip has an outer diameter at the fulcrum, the outer diameter being substantially equal to an inner diameter of the tip case.

5. The contact tip for welding according to Claim 1, wherein
the tip case includes a protrusion in contact with the power supply tip on an inner surface of the tip case, and
the protrusion includes an inclined surface on a side in contact with the power supply tip.

6. The contact tip for welding according to Claim 1, wherein
L2/2 < L1 is satisfied, where
L1 is a first distance between the press point and the fulcrum and
L2 is a second distance between the fulcrum and a point holding the welding wire.

7. The contact tip for welding according to Claim 2, wherein
the elastic member has a spring constant in a range from 2.5 N/mm to 20 N/mm inclusive.
